# EUROPÄISCHE PATENTSCHRIFT

(11) **EP 3 356 110 B1**
(45) Veröffentlichungstag und Bekanntmachung des Hinweises auf die Patenterteilung: **30.09.2020**
(21) Anmeldenummer: 16748106.8
(22) Anmeldetag: 01.08.2016
(51) Int. Cl.: B29C 45/00, B29C 45/14, B29C 45/16

(54) **BEFESTIGUNGSBUCHSE FÜR EIN STRUKTURBAUTEIL AUS CFK**
FIXING BUSHING FOR A STRUCTURAL COMPONENT MADE FROM CARBON FIBRE REINFORCED PLASTIC
DOUILLE DE CONNECTION POUR UNE PIÈCE STRUCTURELLE DE RÉSINE RENFORCÉE EN FIBRES DE CARBONES

(30) Priorität: 30.09.2015 DE 102015218957
(43) Veröffentlichungstag der Anmeldung: 08.08.2018
(73) Patentinhaber: Bayerische Motoren Werke Aktiengesellschaft, 80809 München (DE)
(72) Erfinder: PURREITER, Christoph, 80809 München (DE)
(86) Internationale Anmeldenummer: PCT/EP2016/068351
(87) Internationale Veröffentlichungsnummer: WO 2017/054963

(56) Entgegenhaltungen:
- EP-A1- 1 958 763
- EP-A1- 2 578 473
- DE-A1-102010 028 743
- DE-A1-102010 053 960
- DE-A1-102012 000 633
- DE-A1-102014 209 276

## Beschreibung

Die Erfindung beschreibt eine krafteinleitende Befestigungsbuchse für ein Teil aus kohlefaserverstärktem Kunststoff nach dem Oberbegriff des Anspruchs 1 und ein solches Teil, hergestellt im Spritzgussverfahren.

Solche Buchsen sind bekannt, die als Einleger, zum Beispiel in einem Spritzgussteil, von außen in das Teil einzuleitende Kräfte, zum Beispiel von einer Befestigungsschraube oder einer Lagerung, so in das Teil einleiten, dass örtliche Spannungsspitzen vermieden werden. Besteht das Teil wenigstens im Bereich des Einlegers aus kohlefaserverstärktem Kunststoff, CFK, so sollte aus Korrosionsgründen eine solche Befestigungsbuchse, wenn sie aus Metall besteht, aus Edelstahl oder anderen edlen Metallen oder Metalllegierungen gefertigt sein, wodurch sie, schon aufgrund der Kosten des Materials, das Teil verteuert. Aus Festigkeitsgründen könnte allerdings auch ein so genanntes unedleres und damit preiswerteres Eisenmetall oder eine entsprechende Metalllegierung für den Einleger verwendet werden, was dann allerdings zu Qualitätseinbußen aufgrund möglichen Auftretens von Korrosion führen könnte.

Ganz allgemein sind Maßnahmen zur Korrosionsvermeidung in Zusammenhang mit Bauteilen aus kohlefaserverstärkten Kunststoffen bekannt. Die DE 2013 205 797 beschreibt ein Rad für Kraftfahrzeuge, mit einer Schrauben oder Muttern aufweisenden Vorrichtung zur Befestigung einer Radschüssel aus Faserverbundwerkstoff an einer Fahrzeugnabe.

Danach ist ein solches Rad, mit einer zur Aufnahme eines Reifens bestimmten Felge und einer mit dieser verbundenen Radscheibe aus Faserverbundwerkstoff und einer Schrauben oder Muttern aufweisenden Einrichtung zur Befestigung der Radscheibe an einer Radnabe, wozu die Radscheibe axial gerichtete Durchbrechungen zum Durchtritt der Schrauben oder von Gewindebolzen zum Aufschrauben der Muttern besitzt, dadurch gekennzeichnet, dass die Einrichtung für jede Durchbrechung der Radscheibe einen Isolierkörper, eine Buchse und eine Scheibe, jeweils mit mittiger Durchbrechung, umfasst, die die Durchbrechung der Radscheibe U-förmig einfassen, wobei die Buchse als Zarge am Innenumfang der Durchbrechung anliegt und der Isolierkörper und die Scheibe an der Zarge und an der Radscheibe jeweils auf einer Seite des Rades anliegend, die Radscheibe in radialer Richtung wenigstens teilweise abdecken, der Isolierkörper zur Radinnenseite und die Scheibe zur Radaußenseite hin gerichtet. Dabei besteht der Isolierkörper, die Buchse und die Scheibe aus keramischem Werkstoff oder aus hochwertigen Metalllegierungen, wie Edelstahl oder Titan.

Des Weiteren beschreiben die EP 2 578 473 A1 und die DE 10 2014 209 276 A1 Kraftfahrzeugteile aus faserverstärktem Kunststoff mit Metallverstärkung, von denen letztgenannte Veröffentlichung zwangsläufig einen bedingten Korrosionsschutz durch eine Beschichtung eines verstärkenden Metallcoils mit einem adhäsiven Kleber oder mit einem Haftvermittler aufzeigt, wenn Metallcoil und faserverstärkter Kunststoff durch die Beschichtung verbunden sind.

Oben beschriebenen Nachteilen abzuhelfen und eine preiswerte Alternative einer metallischen Buchse für einen CFK-Einleger bereitzustellen, ist Aufgabe der Erfindung.

Die Aufgabe wird mit den Merkmalen des Anspruchs 1 gelöst. Weitere Ausgestaltungen der Erfindung ergeben sich aus den abhängigen Ansprüchen.

Nach der Erfindung ist eine Befestigungsbuchse, als Einleger für ein Teil aus kohlefaserverstärktem Kunststoff, die aus einem Eisenwerkstoff oder einer Metalllegierung, deren Redoxpaare ein negatives Standardpotential bezüglich der Normal-Wasserstoffelektrode aufweisen, besteht und der Eisenwerkstoff oder die Metalllegierung so mit einem weiteren Kunststoff überzogen ist, dass der kohlefaserverstärkte Kunststoff und der Eisenwerkstoff oder die Metalllegierung voneinander isoliert sind dadurch gekennzeichnet, dass der weitere Kunststoff glas- oder aramidfaserverstärkt ist.

Wenn eine Befestigungsbuchse aus so genanntem unedlen Metall auf diese Weise als Einleger in ein Teil aus kohlefaserverstärktem Kunststoff form-, kraft-, oder materialschlüssig eingebracht ist, hat das den Vorteil, dass durch die elektrische Isolation des unedlen Metalls vom kohlefaserverstärkten Kunststoff Galvanokorrosion vermieden wird. So können in dem beschriebenen Anwendungsfall vorteilhafterweise preiswertere Metalle für Befestigungsbuchsen verwendet werden und es sind keine zusätzliche Korrosionsschutzmaßnahmen zu den Verbindungspartnern notwendig. Eine vorteilhaft gute Verbindung zwischen der Isolierschicht der Befestigungsbuchse und dem kohlefaserverstärkten Kunststoff kommt durch Verwendung desselben Basismaterials zustande, zum Beispiel Polyamid als weiterer Kunststoff und als Matrixkunststoff des CFKs.

Bevorzugte Ausführungen der Erfindung sehen vor, dass die Befestigungsbuchse zusammen mit dem Teil aus kohlefaserverstärktem Kunststoff ein Spritzgussteil bildet. Dabei kann der weitere Kunststoff ein Thermoplast und/oder ein Duroplast sein. Insbesondere kommen als Materialien für den weiteren Kunststoff Polyamid oder Polypropylen in Frage.

Die Befestigungsbuchse ist dabei vorteilhafterweise zur Aufnahme eines Befestigungsmittels gestaltet, so dass das Spritzgussteil als Teil aus kohlefaserverstärktem Kunststoff mit einer Befestigungsbuchse als Einleger auf einfache Weise spannungsoptimiert als Verkleidungsteil oder als Lenker insbesondere für ein Kraftfahrzeug Verwendung finden kann.

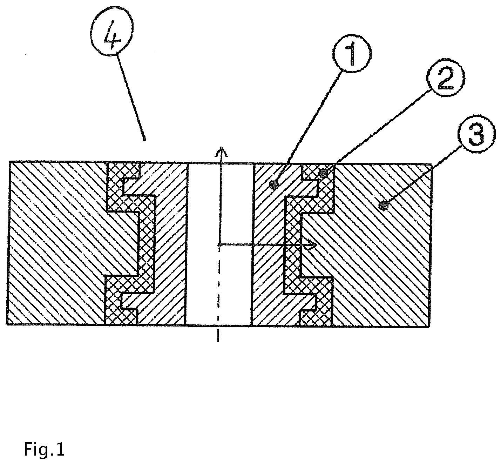

Die Erfindung wird anhand eines bevorzugten Ausführungsbeispiels weiter erläutert und beschrieben. Die einzige Figur zeigt einen Querschnitt einer Befestigungsbuchse gemäß der Erfindung als Einleger eingespritzt in ein Teil aus kohlefaserverstärktem Kunststoff.

In ein Spritzgussteil 4, ein beliebig gestaltetes Strukturbauteil 3, aus im Wesentlichen kohlefaserverstärktem Kunststoff, abgekürzt CFK, ist eine Befestigungsbuchse 1 aus so genanntem unedlen Metall als Einleger aussenseitig eingebettet.

Unedle Metalle sind nach chemischer Definition Metalle, deren Redoxpaare ein negatives Standardpotential bezüglich der Normal-Wasserstoffelektrode aufweisen, Metalle mit einem positiven Standardpotential werden dagegen als Halbedel- oder Edelmetalle bezeichnet Unedle Metalle reagieren unter Normalbedingungen mit Sauerstoff aus der Luft, sie oxidieren. Während dabei beispielsweise Eisen rostet, passivieren sich beispielsweise Zink und Aluminium, indem sie eine korrosionsbeständige Oxidschicht ausbilden, die weitere Oxidation verhindert. Passivierte Metalle erscheinen häufig edel, sind es aber nicht, da sie prinzipiell weiter oxidieren würden, wenn die Oxidschicht den Kontakt mit Oxidationsmitteln (etwa Sauerstoff) nicht verhindern würde. Sie sind inert, aber nicht thermodynamisch stabil.

Um eine korrosive Wirkung zwischen dem kohlefaserverstärkten Kunststoff des Strukturbauteils 3 und dem unedlen Metall der Befestigungsbuchse 1 zu verhindern, ist diese mit einer Isolierschicht 2 aus einem weiteren Kunststoff überzogen, der dem Matrixkunststoff des kohlefaserverstärkten Kunststoffs 3 entspricht, was eine besonders stabile Verbindung zwischen der überzogenen Befestigungsbuchse 1, 2 und dem kohlefaserverstärkten Kunststoff des Strukturbauteils 3 ermöglicht. Die Isolierschicht 2 überzieht die Befestigungsbuchse 1 überall dort, wo eine Kontaktmöglichkeit zum kohlefaserverstärkten Kunststoff des Strukturbauteils 3 besteht. In diesem Ausführungsbeispiel ist dies ein Aussenumfang der Befestigungsbuchse 1.

Die Isolierschicht 2 wird auf die Befestigungsbuchse 1 aus unedlem Metall mittels Spritzgießen aufgebracht. Anschließend wird die Befestigungsbuchse 1 mit ihrer Isolierschicht 2 in einer nicht gezeichneten Spritzgussform des Strukturbauteils 3 mit CFK umspritzt. Durch das Aufbringen der Isolierschicht 2 aus weiterem Kunststoff oder weiterem Kunststoff mit Glasfaser auf die Befestigungsbuchse 1 kann Korrosion zwischen dem unedlen Metall und CFK vermieden werden.

Bei Verwendung des gleichen Kunststoffs für die Isolierschicht 2 und den Matrixwerkstoff des Strukturbauteils 3, zum Beispiel PA66GF50 für die Isolierschicht 2 und PA66CF40 als Matrixwerkstoff des Strukturbauteils 3 entsteht im Prozess eine gute Verbindung zwischen Isolierschicht 2 und Strukturbauteil 3.

## Patentansprüche

1. Befestigungsbuchse (1) als Einleger für ein Strukturbauteil (3) aus kohlefaserverstärktem Kunststoff, die aus einem Eisenwerkstoff oder einer Metalllegierung, deren Redoxpaare ein negatives Standardpotential bezüglich der Normal-Wasserstoffelektrode aufweisen, besteht und der Eisenwerkstoff oder die Metalllegierung so mit einer Isolierschicht (2) aus einem weiteren Kunststoff überzogen ist, dass der kohlefaserverstärkte Kunststoff und der Eisenwerkstoff oder die Metalllegierung voneinander isoliert sind, **dadurch gekennzeichnet, dass** der weitere Kunststoff glas- oder aramidfaserverstärkt ist.

2. Befestigungsbuchse (1) nach Anspruch 1, **dadurch gekennzeichnet, dass** diese zusammen mit dem Teil aus kohlefaserverstärktem Kunststoff ein Spritzgussteil (4) bildet.

3. Befestigungsbuchse (1) nach Anspruch 1 oder 2, **dadurch gekennzeichnet, dass** der weitere Kunststoff ein Thermoplast und/oder ein Duroplast ist.

4. Befestigungsbuchse (1) nach einem der Ansprüche 1 bis 3, **dadurch gekennzeichnet, dass** der weitere Kunststoff Polyamid oder Polypropylen ist.

5. Befestigungsbuchse (1) nach einem der Ansprüche 1 bis 4, **dadurch gekennzeichnet, dass** diese ein Befestigungsmittel aufnimmt.

## Claims

1. Fixing bushing (1), which is in the form of an inlay for a structural component (3) made from carbon fibre-reinforced plastic and consists of an iron material or a metal alloy, the redox pairs of which have a negative standard potential with respect to the normal hydrogen electrode, and the iron material or the metal alloy is covered by an insulating layer (2) made from a further plastic such that the carbon fibre-reinforced plastic and the iron material or the metal alloy are insulated from one another, **characterized in that** the further plastic is reinforced with glass fibres or aramid fibres.

2. Fixing bushing (1) according to Claim 1, **characterized in that** it forms an injection moulded part (4) together with the part made from carbon fibre-reinforced plastic.

3. Fixing bushing (1) according to Claim 1 or 2, **characterized in that** the further plastic is a thermoplastic and/or a thermosetting plastic.

4. Fixing bushing (1) according to one of Claims 1 to 3, **characterized in that** the further plastic is polyamide or polypropylene.

5. Fixing bushing (1) according to one of Claims 1 to 4, **characterized in that** it accommodates a fastening means.

## Revendications

1. Douille de fixation (1) en tant que jaquette pour un élément structural (3) composé de plastique renforcé par des fibres de carbone, qui est constituée d'un matériau de fer ou d'un alliage métallique, dont les paires rédox présentent un potentiel standard négatif par rapport à l'électrode normale à l'hydrogène, et le matériau de fer ou l'alliage métallique étant recouvert d'une couche d'isolation (2) d'un plastique supplémentaire de telle façon que le plastique renforcé par des fibres de carbone et le matériau de fer ou l'alliage métallique sont isolés l'un de l'autre, **caractérisée en ce que** le plastique supplémentaire est renforcé par des fibres de verre ou des fibres d'aramide.

2. Douille de fixation (1) selon la revendication 1, **caractérisée en ce que** celle-ci forme, conjointement avec la partie composée de plastique renforcé par des fibres de carbone, une pièce de moulage par injection (4).

3. Douille de fixation (1) selon la revendication 1 ou 2, **caractérisée en ce que** le plastique supplémentaire est un thermoplastique et/ou un plastique thermodurcissable.

4. Douille de fixation (1) selon l'une quelconque des revendications 1 à 3, **caractérisée en ce que** le plastique supplémentaire est un polyamide ou un polypropylène.

5. Douille de fixation (1) selon l'une quelconque des revendications 1 à 4, **caractérisée en ce qu'**elle reçoit un agent de fixation.
